# EUROPEAN PATENT APPLICATION

(11) **EP 4 160 907 A1**
(43) Date of publication of application: **05.04.2023**
(21) Application number: 21199750.7
(22) Date of filing: 29.09.2021
(51) Int. Cl.: H02S 20/22

(54) **PHOTOVOLTAIC MODULE**

(71) Applicant: g-neration.energy AG, 3600 Thun (CH)
(72) Inventor: HOFER-NOSER, Patrick, 3600 Thun (CH); BÄCKMANN, Marcus, 3645 Gwatt (CH); LOPES, André, 3600 Thun (CH)
(74) Representative: Patentbüro Paul Rosenich AG

(57) **Abstract**

The invention relates to a photovoltaic module (1) comprising a plate-shaped support (5) and solar cells (6) carried by the plate-shaped support and connected to an electric interface (7), preferably in form of a terminal box, wherein on the front side the area of the photovoltaic module (1) is divided into photovoltaic active area (2) and inactive area (3), wherein the area of inactive area (3) of the photovoltaic module (1) amounts to at least 20%, preferably to at least 40%, more preferred to at least 80%, of the area of photovoltaic active area (2) of the photovoltaic module (1).

## Description

The invention relates to a photovoltaic module comprising a plate-shaped support and solar cells carried by the plate-shaped support and connected to an electric interface, preferably in form of a terminal box. The invention also relates to a photovoltaic system according to claim 13 and a method for installing a photovoltaic system according to claim 15.

In the course of rising tendency towards renewable energy systems, the roofs of private houses, company buildings and also public buildings are provided with photovoltaic modules. Thereby, the photovoltaic modules are e.g. mounted above the existing roof or facade, i.e. they cover the roof or facade at least partially, mainly facing south.

It is also known in prior art to form the protective layer of the roof or facade itself from photovoltaic modules, i.e. the photovoltaic modules no longer cover an existing roof or facade but form the roof directly. With such a solution material and costs may be saved.

In both cases it may be difficult to install photovoltaic modules that cover the complete area that is available.

As used in this document "roof" may comprise any covering structure or wall. It may extend horizontally, vertically or any other direction.

"facade" may comprise any more or less vertical structure including but not limited to a covering of a wall, a noise protection wall or a wall or fence.

The inventive modules may form a planar structure (such as a noise protection wall, carport, barrier, fence, shades etc).

The object of the present invention is to provide a photovoltaic module that provides a high degree of flexibility also during installing a photovoltaic system, e.g. on a roof. An adaption to local conditions should be possible. The dimension of the total area covered by photovoltaic modules within a photovoltaic system should be feasible in a broad range and not restricted to the multiple of a standard size of modules. The arranging and mounting procedure of such modules should be easy and reliable. The construction should be simple and low-cost, while maintaining an aesthetically pleasing appearance.

The object is at least partially achieved by means of a photovoltaic module comprising a plate-shaped support and solar cells carried by the plate-shaped support and electrically connected to an electric interface, preferably in form of a terminal or junction box or a micro converter, wherein on the front side the area of the photovoltaic module is divided into photovoltaic active area and inactive area, wherein the area of inactive area of the photovoltaic module amounts to at least 20%, preferably to at least 40%, more preferred to at least 80%, of the area of photovoltaic active area of the photovoltaic module.

In a preferred embodiment (option a), the area of the photovoltaic active area amounts to at least 500 cm², preferably to at least 1000 cm², even more preferred to at least 2000 cm².

In a preferred embodiment (option b), the photovoltaic module comprises more than two, preferably more than four, even more preferred more than five, thick film solar cells in at least one of the active areas. As used in this document solar cells may be one solar cell, a string of solar cells and any type of pv technology such as thin film and thick film solar cells. Moreover, the solar cells may be any technology such as crystalline solar cells (also called thick film cells), most commonly based on silicon or a thin film technology such as CIGS.

The electric interface normally comprises a at least one so-called junction box and or attachment cables.

As used in this document, the front side is that side of the solar module that in normal use faces the sun. In bi-facial solar modules any of the sides may be considered the front side, normally the one with the largest efficiency is chosen." solar module" and photovoltaic module" are used interchangeably.

The active area of the photovoltaic module may amount to at least 5%, preferably to at least 10%, more preferred to at least 20%, of the area of the photovoltaic module.

The photovoltaic active area and its functionality are independent of the photovoltaic inactive area. This allows removing a portion of the inactive area by means of cutting or breaking.

The invention allows customizing a module with respect to its size and shape. This may happen on the construction site, i.e. directly before mounting the respective module. With other words, the invention allows tailoring a module according to the special geometric conditions at the construction site. The inventive modules are produced in a factory while the individual customizing may be performed outside the factory, preferably directly at the construction site, where the modules are installed and mounted.

At least some of the modules may be customizing in the factory. Since standard modules may thus be cut to many different sizes, the manufacturing process and logistics are kept relatively simple. The modules may be cut to size just prior to delivery necessitating only a few standard modules to be produced and stored.

The electric interface, usually a terminal box at the back side of the module, may be arranged in the area of the photovoltaic active area. Thus, the electric interface is also not impaired when removing a piece of the photovoltaic inactive area. All components ensuring the photovoltaic functionality of the active area are not affected when cutting or breaking the inactive area.

The inactive area is an area without photovoltaic functionality. Usually, the inactive area is completely free from solar cells. In an embodiment, it would be possible to provide solar cells also in the inactive area, however, they would not have to deliver electrical power, since they would be inactive and/or not electrically connected with each other or with any terminal.

The cut edge resulting from cutting or breaking a piece of the inactive area may be covered, preferably sealed, by means of a cover or seal, such as glue and/or a strip and/or a bar in order to prevent moisture and dirt intruding into the layer structure of the module.

In a preferred embodiment the area of the photovoltaic active area amounts to at least 500 cm², preferably to at least 1.000 cm², even more preferred to at least 2.000 cm².Modules according to the invention typically comprise more than 4 solar cells such as more than 12 or more than 20 solar cells.

In a preferred embodiment the photovoltaic active area is smaller than 80% of the area of the photovoltaic module, preferably smaller than 60% even more preferably smaller than 50%.

Modules according to the invention typically are larger than 40cmx30cm such as larger than 80cm x 60cm.

In a preferred embodiment the photovoltaic module comprises more than two, preferably more than four, even more preferred more than five, thick film or crystalline solar cells.

In a preferred embodiment the plate-shaped support is a sheet of glass. A second sheet of glass may be used to sandwich the solar cells, thus forming a so-called glass-glass module. Alternatively, a back sheet foil may be used.

The plate shape support may be formed by polymer sheet.

The plate-shaped support preferably is flat.

In a preferred embodiment, the solar module, preferably the smallest rectangular cuboid enclosing the solar module, in a direction perpendicular to the plate-shaped support is not higher than 20mm, preferably not higher than 15mm even more preferably not higher than 10mm, when a possible module frame is disregarded.

The solar module according to the invention may be made in conventional ways e.g. with encapsulant layers between the solar cells and neighbouring layers such as the plate-shaped support.

In a preferred embodiment the photovoltaic module is cuttable and/or breakable in the inactive area without affecting the photovoltaic functionality of the photovoltaic active area. This measure allows the installer to customize the module without being concerned about the functionality of the photovoltaic active area while being able to tailor the size to his needs.

In a preferred embodiment the inactive area of the photovoltaic module is free from solar cells.

In a preferred embodiment the inactive area is characterized by an imitation of solar cells, preferably by a printed imitation of solar cells, preferably printed on a layer of the photovoltaic module (1) such as a (glass) cover plate, encapsulant layer or back sheet. Here, the active area and the inactive area are not distinguishable by an observer being far away from the photovoltaic system. With other words, the optical appearance is homogenous.

In a preferred embodiment the inactive area comprises inoperable and/or unassociated solar cells. These cells may be defective and or second tier cells. These cells may be interconnected to form one or multiple strings, may not be interconnected or any combination thereof.

In a preferred embodiment the inactive area comprises inoperable and/or solar cells not associated with the electric interface to which at least some of the solar cells of the photovoltaic active area are connected and/or wherein the electric interface is mounted inside, preferably completely inside, the border of the photovoltaic active area or near an edge of the module.

In a preferred embodiment the photovoltaic active area is formed by at least two photovoltaic active, preferably independent subareas, each preferably being connected to a separate electric interface, separated by inactive area. In that way an active region may be sacrificed if needed for the shape and size of the module. In that case another region still produces electrical power.

In a preferred embodiment, in a first direction running within the plane of the photovoltaic module and perpendicular to a first outer edge of the photovoltaic module, the extension of the inactive area between the first outer edge and the border of the photovoltaic active area amounts to at least 20cm, preferably at least 50cm, and/or amounts to at least 10%, preferably at least 20%, more preferred at least 50% of the extension of the photovoltaic active area in the first direction.

In a preferred embodiment in the first direction, the extension of the inactive area between the outer edge opposed to the first outer edge and the border of the photovoltaic active area amounts to at least 20cm, preferably at least 50cm, and/or amounts to at least 10%, preferably at least 20%, more preferred at least 50%, of the extension of the photovoltaic active area in the first direction.

In a preferred embodiment the photovoltaic module is rectangular and the first outer edge is the shorter edge of the rectangle.

In a preferred embodiment at least one outer edge of the module, and preferably the opposing edge as well, is longer than 20cm, preferably longer than 30cm, even more preferably longer than 50cm. Even more preferably two other edges are longer than 20cm, preferably longer than 40cm, even more preferably longer than 40cm in addition. The module preferably being rectangular or square.

In a preferred embodiment in a second direction running within the plane of the photovoltaic module and perpendicular to a second outer edge transverse to the first outer edge of the photovoltaic module, the extension of the inactive area between the second outer edge and the border of the photovoltaic active area amounts to at least 20cm, preferably at least 50cm, and/or amounts to at least 10%, preferably at least 20%, more preferred at least 50%, of the extension of the photovoltaic active area in the second direction.

In a preferred embodiment the inactive area surrounds the photovoltaic active area, wherein preferably the width of the inactive area amounts everywhere to at least 5cm, preferably at least 10cm, even more preferably at least 20cm.

In a preferred embodiment the photovoltaic module has a layer structure, in which the solar cells of the photovoltaic active area are embedded. Preferably at least some of the layers, preferably all of the layers, of the layer structure extend continuously from the active area into the inactive area.

In a preferred embodiment, the plate-shaped support is made of plastic and/or glass.

The object is also at least partially achieved by a photovoltaic system comprising a plurality of photovoltaic modules, preferably mounted to a roof or facade, characterized in that at least one of the photovoltaic modules is a photovoltaic module according to the invention, wherein preferably at least one outer edge of the at least one photovoltaic module according to the invention is formed by a cut edge of the inactive area. The cut edge results from cutting or breaking a piece of the inventive module, the cut edge preferably running through the inactive area. According to the invention the cut edge is formed after the module was manufactured.

In a preferred embodiment the cut edge resulting from cutting or breaking is covered, preferably sealed, by means of a cover and/or seal, preferably glue and/or a strip and/or a bar.

In a preferred embodiment at least one, preferably at least two, even more preferably at least four photovoltaic modules have been cut to a different size(s) and shapes than that of at least some, preferably all, of the other photovoltaic modules in the system.

The object is also at least partially achieved by a method for installing a photovoltaic system preferably according to the invention, preferably on a roof or facade, comprising the steps of:
(a) arranging a plurality of photovoltaic modules side by side;
(b) cutting at least one photovoltaic module designed according to the invention,

wherein step (b) comprises cutting away a piece of the photovoltaic module, preferably in the inactive area of the photovoltaic module, preferably without affecting the functionality of the photovoltaic active area,
wherein preferably step (b) is performed on the construction site.

Steps (a) and (b) may be done in any order and or interleaved or in parallel and may be repeated as needed.

In general, first, some modules without a cut edge are mounted. This may be inventive modules or standard modules. Then (inventive) modules are cut to fit remaining sections of the roof or facade. These steps are then repeated as needed. Alternatively, some modules with a cut edge are installed and then the above steps are conducted.

The object is further achieved by a method for installing an inventive photovoltaic system preferably according to the invention, preferably on a roof or facade, comprising, in this order, the steps of:
(a) manufacturing a plurality of photovoltaic modules having mainly identical geometric dimensions, preferably according to the invention;
(b) preferably storing the plurality of modules in a first location;
(c) transporting photovoltaic modules of the plurality of photovoltaic modules to a conversion site that is preferably different from the first location, preferably to the location where they have to be installed;
(d) cutting at least one of the photovoltaic modules having been transported to the conversion site,
wherein step (d) comprises cutting away a piece of the module. The cut is preferably made in an inactive area of the photovoltaic module. In that way the photovoltaic functionality and/or the electrical output of at least one of the photovoltaic active areas of the photovoltaic module is not affected.

In step (b) the modules may be kept in stock or a warehouse so that they can be taken to be tailored as needed. In this way the number of different module types can be kept low. The modules may be taken out of stock to be tailored in the conversion site. This can be the factory e.g. that the warehouse is part of or they are shipped to the site where the solar system has to be built.

As used above "a plurality" may mean a batch of at least 5, preferably at least 10, even more preferably at least 30.

In a preferred embodiment step (d) is performed by means a cutting tool, preferably a laser cutting machine and/or a mechanical saw, and/or a breaking tool, preferably by applying a predetermined breaking line.

Further embodiments of the invention are indicated in the figures and in the dependent claims. The list of reference marks forms part of the disclosure. The invention will now be explained in detail by the drawings. In the drawings:
- Fig. 1: shows a photovoltaic module according to the invention.
- Fig. 2: shows two active regions.
- Fig. 3: shows a cut solar module.
- Fig. 4: shows a solar system made according to the invention
- Fig. 5: shows the cutting of a solar module according to the invention

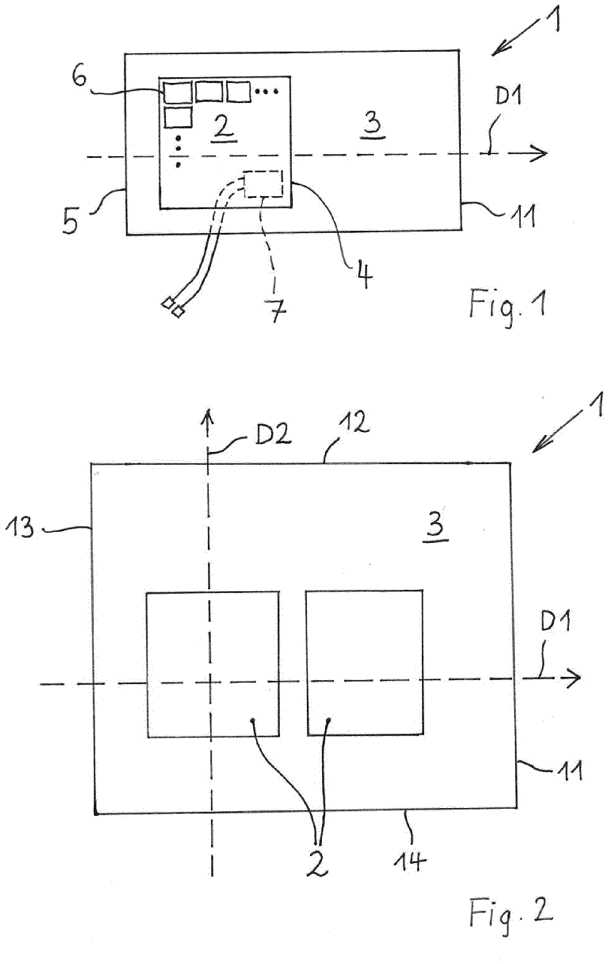

Figure 1 schematically shows a photovoltaic or solar module 1 with a photovoltaically active region 2 and a photovoltaically inactive region 3. A matrix of solar cells 6 in the active region, delimited by border 4, converts light into electrical energy that is outputted via electric interface 7 to be used outside of the solar module. The electric interface (e.g. a junction box or micro converter) is located inside border 4 of the active area 2 on the side of the module that faces the mounting structure such as a roof or facade (not shown).

The active 2 and inactive area 3 lie inside a plate-shape support 5 of the solar module. The latter typically being a glass plate or a polymer sheet that offers some stability. The module is rectangular, mainly extending in direction D1.

Figure 2 shows an inventive solar module with two active areas 2 (subareas). The inactive area 3 surrounds both areas.

According to the invention, an active region may be sacrificed if needed. In that case another subarea still produces electrical power.

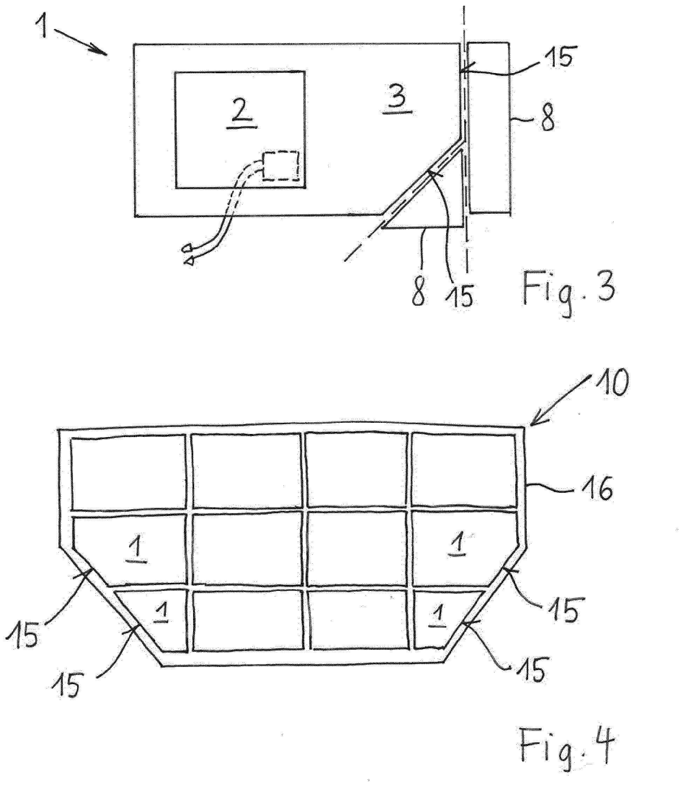

Figure 3 shows two cut edges 15 that separate two pieces 8 of the inactive area 3 from the module 1. The active region 2 remains unaffected and can therefore function as before.

According to the invention the modules 1 can be tailor made to an existing roof or facade 16. This is shown in figure 4 where four solar modules 1 are cut to agree with the shape of the roof or facade. All cut modules have been cut to different sizes than all other modules (assuming that all cut modules have the junction box on the back side).

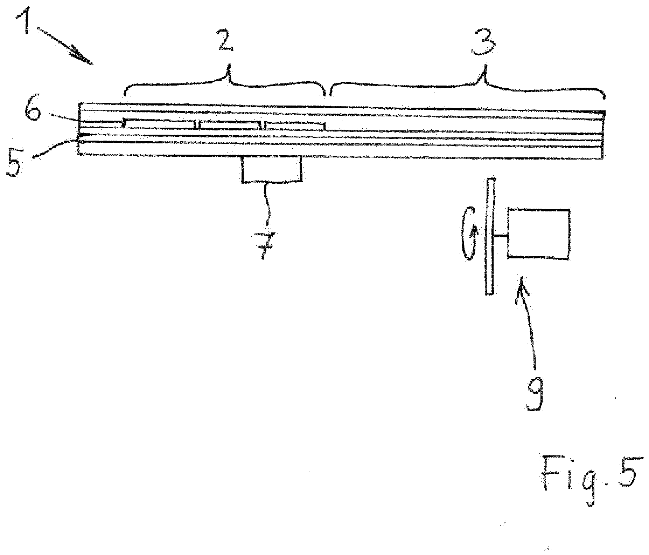

Figure 5 shows a solar module 1 according to the invention. It comprises a plate-shaped support that normally is glass plate or polymer sheet. The solar cells 6 are embedded in layers of encapsulant. A second outer layer 17 finalizes the stack. The latter normally is a glass plate or a so-called back sheet.

The module 1 can be cut in the inactive area 3 using a cutter 9. It can be seen that electric interface 7 is mounted in or below active area 2 so that no electrical connections are severed if the module is cut in the inactive area 3.

The invention is not restricted to these embodiments. Other variants will be obvious for the person skilled in the art and are considered to lie within the scope of the invention as formulated in the following claims. Individual features described in all parts of the above specification, particularly with respect to the figures may be combined with each other to form other embodiments and/or applied mutatis mutandis to what is described in the claims and to the rest of the description, even if the features are described in respect to or in combination with other features.

### List of reference signs

- 1: Photovoltaic module
- 2: Photovoltaic active area
- 3: Inactive area
- 4: Border of photovoltaic active area
- 5: Plate-shaped support
- 6: Solar cells
- 7: Electric interface
- 8: Piece of inactive area
- 9: Cutting tool
- 10: Photovoltaic system
- 11: First outer edge
- 12: Second outer edge
- 13: Third outer edge
- 14: Fourth outer edge
- 15: Cut edge
- 16: Roof or facade17 Outer layer
- D1: First direction
- D2: Second direction
- W: Width

## Claims

1. Photovoltaic module (1) comprising a plate-shaped support (5) and solar cells (6) carried by the plate-shaped support and connected to an electric interface (7), preferably in form of a terminal box, wherein on the front side the area of the photovoltaic module (1) is divided into a photovoltaic active area (2) and an inactive area (3), wherein the area of inactive area (3) of the photovoltaic module (1) amounts to at least 20%, preferably to at least 40%, more preferred to at least 80%, of the area of photovoltaic active area (2) of the photovoltaic module (1) and wherein
a) the area of the photovoltaic active area (2) amounts to at least 500 cm², preferably to at least 1000 cm², even more preferred to at least 2000 cm², and or
b) the photovoltaic module (1) comprises more than two, preferably more than four, even more preferred more than five, thick film solar cells in the active area.

2. Photovoltaic module according to claim 1, **wherein** the photovoltaic module (1) is cuttable and/or breakable in the inactive area (3) without affecting the photovoltaic functionality of the photovoltaic active area (2).

3. Photovoltaic module according to claim 1 or 2, **wherein** the inactive area (3) of the photovoltaic module (1) is free from solar cells.

4. Photovoltaic module according to one of the preceding claims, **wherein** the inactive area (3) is **characterized by** an imitation of solar cells, preferably by a printed imitation of solar cells, preferably printed on a layer of the photovoltaic module (1).

5. Photovoltaic module according to one of the preceding claims, **wherein** the inactive area (3) comprises inoperable and/or solar cells not associated with the electric interface (7) to which the solar cells (6) of the photovoltaic active area (2) are connected **and/or wherein** the electric interface (7) is mounted inside, preferably completely inside, the border (4) of the photovoltaic active area (2) or near an edge of the module.

6. Photovoltaic module according to one of the preceding claims, **wherein** the photovoltaic active area (2) is formed by at least two photovoltaic active subareas separated by inactive area (3) and/or wherein the photovoltaic module (1) comprises a second active area, preferably operationally connected to a second electric interface that preferably is mounted inside, preferably completely inside, the border of the second photovoltaic active area.

7. Photovoltaic module according to one of the preceding claims, **wherein** in a first direction (D1) running within the plane of the photovoltaic module (1) and perpendicular to a first outer edge (11) of the photovoltaic module (1), the extension of the inactive area (3) between the first outer edge (11) and the border (14) of the photovoltaic active area (2) amounts to at least 20cm, preferably at least 50cm, and/or amounts to at least 10%, preferably at least 20%, more preferred at least 50%, of the extension of the photovoltaic active area (2) in the first direction (D1).

8. Photovoltaic module according to one of the preceding claims, **wherein** in the first direction (D1), the extension of the inactive area (3) between the outer edge (13) opposed to the first outer edge (11) and the border (4) of the photovoltaic active area (2) amounts to at least 20cm, preferably at least 50cm, and/or amounts to at least 10%, preferably at least 20%, more preferred at least 50%, of the extension of the photovoltaic active area (2) in the first direction (D1).

9. Photovoltaic module according to one of the preceding claims, **wherein** the photovoltaic module (1) is rectangular, and the first outer edge (11) is the shorter edge of the rectangle.

10. Photovoltaic module according to one of the preceding claims, **wherein** in a second direction (D2) running within the plane of the photovoltaic module (1) and perpendicular to a second outer edge (12) transverse to the first outer edge (11) of the photovoltaic module (1), the extension of the inactive area (3) between the second outer edge (12) and the border (4) of the photovoltaic active area (2) amounts to at least 20cm, preferably at least 50cm, and/or amounts to at least 10%, preferably at least 20%, more preferred at least 50%, of the extension of the photovoltaic active area (2) in the second direction (D2).

11. Photovoltaic module according to one of the preceding claims, **wherein** the inactive area (3) surrounds the photovoltaic active area (2), wherein preferably the width (W) of the inactive area (3) amounts everywhere to at least 20cm, preferably at least 50cm.

12. Photovoltaic module according to one of the preceding claims, **wherein** the photovoltaic module (1) has a layer structure, in which the solar cells (6) of the photovoltaic active area (2) are embedded, wherein at least some of the layers, preferably all of the layers, of the layer structure continue in the inactive area (3) and form the inactive area (3) **and/ or wherein** the plate-shaped support (5) comprises plastic and/or glass.

13. Photovoltaic system (10) comprising a plurality of photovoltaic modules (1), preferably mounted to a roof (16) or facade, **characterized in that** at least one of the photovoltaic modules (1) is a photovoltaic module according to one of the preceding claims,
**wherein preferably** at least one outer edge of the at least one photovoltaic module (1) according to one of the preceding claims is formed by a cut edge (15), that preferably runs through the inactive area (3),
**wherein preferably** the cut edge (15) resulting from cutting or breaking and is preferably covered, preferably sealed, by means of a cover and/or seal, preferably a glue and/or a strip and/or a profile, **wherein preferably** the cut edge (15) and at least one adjacent outer edge (11, 14) of the photovoltaic module (1) enclose an angle between 5° and 85° and/or between 95° and 175° and/or between 185° and 195° and/or between 265° and 255°.

14. Photovoltaic system (10) according to claim 13, **wherein** at least one, preferably at least two, even more preferably at least four of the photovoltaic modules (1) having been cut to a different size(s) than that of at least some, preferably all, of the other photovoltaic modules (1).

15. Method for installing a photovoltaic system (10) preferably according to claim 13 or 14, preferably on a roof (16) or facade, comprising, in this order, the steps of:
(a) manufacturing a plurality of photovoltaic modules (1) according to claims 1 to 12, some of which preferably having mainly identical geometric dimensions;
(b) preferably storing the plurality of modules (1) in a first location;
(c) transporting photovoltaic modules of the plurality of photovoltaic modules (1) to a conversion site, preferably to the location where they have to be installed;
(d) cutting at least one of the photovoltaic modules (1) having been transported to the conversion site,
wherein step (d) comprises cutting away a piece (8) of the module, preferably of an inactive area (3) of the photovoltaic module (1) without affecting the photovoltaic functionality and/or the electrical output of at least one of the photovoltaic active area(s) (2) of the photovoltaic module (1).
